(19) **Europäisches Patentamt / European Patent Office / Office européen des brevets**

(11) **EP 4 593 119 A1**

(12) **EUROPEAN PATENT APPLICATION**
published in accordance with Art. 153(4) EPC

(43) Date of publication:
**30.07.2025 Bulletin 2025/31**

(21) Application number: **23867871.8**

(22) Date of filing: **12.07.2023**

(51) International Patent Classification (IPC):
$H01M\ 4/58$ [(2010.01)]    $C01B\ 25/45$ [(2006.01)]
$H01M\ 4/136$ [(2010.01)]    $H01M\ 4/36$ [(2006.01)]
$H01M\ 4/66$ [(2006.01)]

(52) Cooperative Patent Classification (CPC):
**C01B 25/45; H01M 4/136; H01M 4/36; H01M 4/58; H01M 4/66;** Y02E 60/10

(86) International application number:
**PCT/JP2023/025739**

(87) International publication number:
**WO 2024/062744 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.09.2022 JP 2022150910**

(71) Applicant: **SUMITOMO METAL MINING CO., LTD.**
**Tokyo**
**105-8716 (JP)**

(72) Inventors:
• **YAMAYA, Ryuta**
  **Tokyo 105-8716 (JP)**
• **MIZUNUMA, Shouhei**
  **Tokyo 105-8716 (JP)**
• **OSHITARI, Satoru**
  **Ichikawa-shi, Chiba 272-8588 (JP)**

(74) Representative: **Jones, Nicholas Andrew**
**Withers & Rogers LLP**
**2 London Bridge**
**London SE1 9RA (GB)**

(54) **POSITIVE ELECTRODE MATERIAL FOR LITHIUM ION SECONDARY BATTERY, PRODUCTION METHOD THEREFOR, POSITIVE ELECTRODE FOR LITHIUM ION SECONDARY BATTERY, AND LITHIUM ION SECONDARY BATTERY**

(57) Provided is a positive electrode material for a lithium ion secondary battery, including aggregated particles including aggregated multiple primary particles of a positive electrode active substance containing lithium iron phosphate coated with a carbonaceous film, the positive electrode active substance having a prescribed composition containing lithium iron phosphate, at least one kind of calcium phosphate particles and aluminum phosphate particles existing on a surface of the primary particles of the positive electrode active substance, a grain boundary among the primary particles, or both the surface and the grain boundary. The positive electrode material has high input and output characteristics in using as a positive electrode of a lithium ion secondary battery.

[Fig. 1]

EP 4 593 119 A1

## Description

Technical Field

The present invention relates to a positive electrode material for a lithium ion secondary battery and a method for producing the same, a positive electrode for a lithium ion secondary battery, and a lithium ion secondary battery.

Background Art

Lithium ion secondary batteries have a higher energy density and a higher output power density than lead batteries and nickel hydrogen batteries, and have been applied to various fields including small size electronic devices, such as smartphones, and household backup power supplies, and electric power tools. Large capacity lithium ion secondary batteries are becoming practical for use in electric vehicles and other vehicles and for storing renewable energy sources, such as solar power generation and wind power generation.

A lithium ion secondary battery has at least a positive electrode, a negative electrode, and an electrolyte. The electrode material constituting the positive electrode is a lithium metal complex oxide capable of reversibly intercalating and deintercalating lithium ions, such as lithium cobaltate ($LiCoO_2$) and lithium manganate ($LiMn_2O_4$), which are oxide based positive electrode materials, and lithium iron phosphate ($LiFeOP_4$), which is an olivine based positive electrode material, and improvements thereof are being investigated from various standpoints, such as increase of the capacity, extension of the life, enhancement of the safety, and reduction of the cost of batteries.

Lithium iron phosphate ($LiFeOP_4$) described above is a material capable of easily reducing the cost due to the use of iron, which is abundant and inexpensive. Lithium iron phosphate also has excellent characteristics that the oxide based positive electrode materials represented by lithium cobaltate cannot achieve, for example, the outstanding safety due to the strong covalent bond between phosphorus and oxygen, preventing oxygen release at a high temperature.

On the other hand, lithium iron phosphate is low in Li ion diffusibility and electron conductivity due to the olivine structure, resulting in a disadvantage of input and output characteristics that is inferior to the oxide based positive electrode material.

For improving the input and output characteristics of lithium iron phosphate, it has been proposed to improve the Li ion diffusibility and the electron conductivity by allowing the particles of lithium iron phosphate to be fine and coating the surface of each particle with a conductive carbonaceous film.

For example, PTL 1 proposes a positive electrode active substance for a non-aqueous electrolyte battery, including primary particles having an Al compound existing in at least a part of the crystal grain boundary of the polycrystalline particles having an olivine type crystal structure and a chemical composition represented by the following general formula (1):

$$LiFePO_4 \qquad (1)$$

Citation List

Patent Literature

PTL 1: JP 2009-032678 A

Summary of Invention

Technical Problem

According to PTL 1, it is stated that the ratio of the discharge capacity obtained in high-rate discharge with respect to the discharge capacity obtained in low-rate discharge can be increased.

The primary particles constituted to have the Al compound existing in at least a part of the crystal grain boundary of the polycrystalline particles proposed by PTL 1 are in a state in which the crystal growth of the phase having the crystal structure is suppressed in the formation process of the primary particles, so as to form multiple crystal particles existing in a large number, and thereby the surface area of the phase having the crystal structure becomes larger than the ordinary ones. It is stated that consequently the electrochemical reactivity is increased, and the ratio of the discharge capacities is improved.

However, even though the growth of the primary particles of lithium iron phosphate is suppressed, the primary particles are sintered in the synthesis thereof through baking and in the heat treatment for coating with the conductive carbonaceous film, resulting in a problem of easy formation of coarse aggregated particles. There is a technique of miniaturizing lithium iron phosphate coated with the conductive carbonaceous film through mechanical pulverization, which however leads to a problem that the pulverization causes reduction in crystallinity and exfoliation of the carbonaceous film from the surface of the primary particles, failing to achieve the sufficient charge and discharge characteristics.

In view of the problems in the ordinary techniques, an object of one aspect of the present invention is to provide a positive electrode material containing lithium iron phosphate that has high input and output characteristics in using as a positive electrode of a lithium ion secondary battery, and a method for producing the same, and also a positive electrode for a lithium ion secondary battery and a lithium ion secondary battery.

Solution to Problem

<1> A positive electrode material for a lithium ion secondary battery, including aggregated particles including aggregated multiple primary particles of a positive electrode active substance coated with a carbonaceous film,

wherein the positive electrode active substance contains lithium iron phosphate, the lithium iron phosphate containing lithium (Li), iron (Fe), and a metal element A (A) in a mass ratio of Li/Fe/A = x/y/1-y, in which x satisfies $0.9 < x < 1.1$, y satisfies $0.2 < y \leq 1.0$, and the metal element A is at least one kind of an additive element selected from the group consisting of Mg, Zn, Co, Mn, Ni, Ti, and V, and
wherein the positive electrode material contains at least one kind of calcium phosphate ($Ca_3(PO_4)_2$) particles and aluminum phosphate ($AlPO_4$) particles existing on a surface of the primary particles of the positive electrode active substance coated with the carbonaceous film, a grain boundary among the primary particles, or both the surface and the grain boundary.

<2> The positive electrode material for a lithium ion secondary battery according to the item <1>, in which the positive electrode material has a Ca content of 100 ppm by mass or more and 5,000 ppm by mass or less, and the positive electrode material has an Al content of 100 ppm by mass or more and 5,000 ppm by mass or less.

<3> The positive electrode material for a lithium ion secondary battery according to the item <1> or <2>, in which the positive electrode material has a crystallite diameter of 80 nm or more and 150 nm or less, and a specific surface area of 6.0 $m^2$/g or more and 14.0 $m^2$/g or less.

<4> The positive electrode material for a lithium ion secondary battery according to the item <1> or <2>, in which the positive electrode material has a tap density of 0.8 g/$cm^3$ or more, an NMP absorption amount of 40 mL/100 g or less, and a powder compact density obtained by compacting the positive electrode material into a circular shape having a diameter of 20 mm under application of a pressure of 16 kN of 2.4 g/$cm^3$ or more.

<5> A method for producing the positive electrode material for a lithium ion secondary battery according to the item <1> or <2>, including

a crystallizing step of preforming crystallization reaction with a metal source having a valence number of 2, 3, or both, and a phosphoric acid source, so as to provide crystallized particles,
a water rinsing step of water rinsing and drying the crystallized particles, so as to provide a precursor of the positive electrode active substance,
a mixing step of mixing the precursor of the positive electrode active substance, a lithium source, and a carbon source, so as to provide a raw material mixture, and
a baking step of baking the raw material mixture in a non-oxidizing atmosphere, so as to provide the positive electrode material containing the positive electrode active substance;
wherein the crystallizing step includes adding one or more selected from the group consisting of a Ca source and an Al source during the crystallization, so as to allow at least one kind of calcium phosphate ($Ca_3(PO_4)_2$) particles and aluminum phosphate ($AlPO_4$) particles to exist on a surface of primary particles of the resulting crystallized particles, a grain boundary among the primary particles, or both the surface and the grain boundary.

<6> A positive electrode for a lithium ion secondary battery, including an aluminum collector and a positive electrode mixture layer formed on the aluminum collector,
wherein the positive electrode mixture layer contains the positive electrode material for a lithium ion secondary battery according to the item <1> or <2>.

<7> A lithium ion secondary battery including at least a positive electrode, a negative electrode, and an electrolyte, wherein the positive electrode is the positive electrode for a lithium ion secondary battery according to the item <6>.

Advantageous Effects of Invention

One embodiment of the present invention can provide a positive electrode material containing lithium iron phosphate that has high input and output characteristics in using as a positive electrode of a lithium ion secondary battery, and a method for producing the same, and also a positive electrode for a lithium ion secondary battery and a lithium ion secondary battery.

Brief Description of Drawing

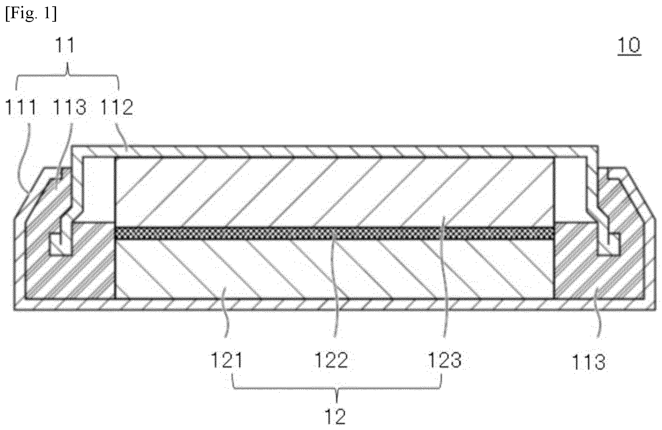

[Fig. 1] Fig. 1 is a schematic illustration showing a cross sectional structure of a coin battery produced in Examples and Comparative Example.

Description of Embodiments

Embodiments for practicing the present invention will be described below. However, the present invention is not limited to the embodiments shown below, and various modifications and substitutions can be made in the embodiments shown below without deviating from the scope of the present invention. In the description below, the expression "A to B" means "A or more and B or less".

[Positive Electrode Material for Lithium Ion Secondary Battery]

The positive electrode material for a lithium ion secondary battery of the present embodiment is a positive electrode material for a lithium ion secondary battery including aggregated particles including aggregated multiple primary particles of a positive electrode active substance coated with a carbonaceous film.

The positive electrode active substance contains lithium iron phosphate, and the lithium iron phosphate contains lithium (Li), iron (Fe), and a metal element A (A) in a mass ratio of $Li/Fe/A = x/y/1-y$, in which x satisfies $0.9 < x < 1.1$, y satisfies $0.2 < y \leq 1.0$, and the metal element A is at least one kind of an additive element selected from the group consisting of Mg, Zn, Co, Mn, Ni, Ti, and V.

The positive electrode material contains at least one kind of calcium phosphate ($Ca_3(PO_4)_2$) particles and aluminum phosphate ($AlPO_4$) particles existing on a surface of the primary particles of the positive electrode active substance coated with the carbonaceous film, a grain boundary among the primary particles, or both the surface and the grain boundary.

The positive electrode material for a lithium ion secondary battery of the present embodiment contains lithium iron phosphate as a positive electrode active substance, and has a structure that has the conductive carbonaceous film for improving the conductivity of the positive electrode material.

In the following description, the positive electrode material for a lithium ion secondary battery may be referred simply to as a "positive electrode material", and the lithium iron phosphate may be referred simply to as "LFP".

The LFP is synthesized through heating, such as baking, in the production process thereof. While a carbonaceous film can be coated in the synthesis of the LFP, a heat treatment with a carbon source is necessarily performed in the case where a carbonaceous film is formed in a separate step.

The LFP has a particle structure including secondary particles formed through aggregation of primary particles. In heating through the baking or the heat treatment above, even though the growth of the primary particles is suppressed through an additive element or formation of a heterogeneous phase in the primary particles, sintering among the primary particles proceeds, and thereby the primary particles are firmly sintered, and coarse aggregated particles (secondary particles) are formed.

In the state where the sintering proceeds, the use thereof as a positive electrode of a lithium ion secondary battery cannot provide the sufficient contact area with the electrolyte, and the distances of the electron conduction and the lithium (Li) ion conduction are increased in the coarse particles, resulting in the deterioration of the charge and discharge characteristics of the battery.

In the following description, the lithium ion secondary battery may be referred simply to as a "battery".

There is a method of mechanically pulverizing for miniaturization after completing the baking and the heat treatment, but strong pulverization is required for the state where the primary particles are firmly sintered, resulting in a problem of deterioration of the crystallinity due to the pulverization. The pulverization after forming the conductive carbonaceous film causes formation of a newborn surface having no conductive carbonaceous film and exfoliation of the film, and also there may be a possibility that the charge and discharge characteristics of the battery is deteriorated.

The positive electrode material of the present embodiment is in the state in which at least one kind of calcium phosphate ($Ca_3(PO_4)_2$) particles and aluminum phosphate ($AlPO_4$) particles are allowed to exist on the surface of the primary particles of the LFP, which is the positive electrode active substance, the grain boundary among the primary particles, or both the surface and the grain boundary. In the following description, "at least one kind of calcium phosphate ($Ca_3(PO_4)_2$) particles and aluminum phosphate ($AlPO_4$) particles" may be referred simply to as "phosphate particles".

The phosphate particles existing functions as a pillar in baking capable of retarding the progress of sintering of the primary particles, and coarse particles are suppressed from forming.

It suffices that the phosphate particles are formed on the surface of the primary particles of the LFP, the grain boundary among the primary particles, or a part of both the surface and the grain boundary, and the phosphate particles are not required to be formed on all the surface and the grain boundary. The phosphate particles may exist either directly on the surface of the LFP functioning as the positive electrode active substance, or on the carbonaceous film that is coated on the positive electrode active substance.

The phosphate particles are not particularly limited, and the diameter of at least a part of the particles may be 10 nm to 500 nm, and preferably 20 nm to 300 nm. The particles having the size existing can further retard the progress of sintering of the primary particles, and coarse particles are further suppressed from forming.

In the case where coarse phosphate particles exist, on the other hand, the coarse particles are unevenly distributed among the secondary particles, and the number of the phosphate particles existing on the surface and the grain boundary of the primary particles is decreased, which may deteriorate the effect of retarding the progress of sintering. Accordingly, the maximum diameter of the phosphate particles is preferably 1 $\mu$m or less.

The size of the phosphate particles can be confirmed by observing the surface or the cross section of the LFP particles with a scanning electron microscope, a transmission electron microscope, or the like.

In the positive electrode material, the Ca content in the positive electrode material is preferably 100 ppm by mass to 5,000 ppm by mass, more preferably 150 ppm by mass to 3,000 ppm by mass, further preferably 200 ppm by mass to 2,000 ppm by mass, and still further preferably 450 ppm by mass to 2,000 ppm by mass. The Al content in the positive electrode material is preferably 100 ppm by mass to 5,000 ppm by mass, more preferably 150 ppm by mass to 3,000 ppm by mass, further preferably 200 ppm by mass to 2,000 ppm by mass, and still further preferably 450 ppm by mass to 2,000 ppm by mass. In the case where the Ca content and the Al content in the positive electrode material are in the ranges, the sufficient amount of phosphate particles can be formed on the surface and the interface of the primary particles, and the formation of the coarse particles through the sintering of the primary particles can be suppressed.

It suffices that at least a part of the contents of Ca and Al forms the phosphate particles, and Ca and Al may also exist in a state other than the formation of the phosphate particles, for example, dissolution in the LFP. The contents of Ca and Al can be analyzed, for example, by the ICP emission spectroscopy. The total content of Ca and Al is preferably 500 ppm by mass or more, more preferably 1,000 ppm by mass or more, and further preferably 1,150 ppm by mass or more.

The positive electrode material of the present embodiment includes the aggregated particles including the aggregated multiple primary particles of the positive electrode active substance containing the LFP having the aforementioned composition.

The LFP may contain at least one kind selected from the group consisting of Mg, Zn, Co, Mn, Ni, Ti, and V as an additive element A. The additive element A contained can enhance the battery characteristics in the case where the positive electrode material is used in the battery. In the case where the ratio x of lithium (Li) and the metal elements other than Li is in the range, the crystallinity of the olivine structure can be enhanced. While the composition of the LFP described above does not include Ca and Al forming the phosphate particles, slight amounts of Ca and Al may be contained in the additive element A as described above.

The positive electrode material of the present embodiment may have a crystallite diameter of 80 nm or more and 150 nm or less. In the case where the crystallite diameter is in the range, the crystallinity can be enhanced to provide the sufficient battery characteristics, such as the charge and discharge characteristics and the cycle characteristics. From this standpoint, the crystallite diameter is preferably 80 nm or more and 130 nm or less, more preferably 80 nm or more and 120 nm or less, and further preferably 80 nm or more and 110 nm or less.

The crystallite diameter can be obtained from the peak in the X-ray diffraction pattern with the Scherrer equation.

The positive electrode material may have a specific surface area of 6.0 $m^2$/g or more and 14.0 $m^2$/g or less. In this case, the electrolyte and the positive electrode material can be sufficiently brought into contact with each other to have high input and output characteristics, and the formation of fine particles can be suppressed to enhance the packing density inside the battery. From this standpoint, the specific surface area is preferably 6.5 $m^2$/g or more and 14.0 $m^2$/g or less, more preferably 8.0 $m^2$/g or more and 14.0 $m^2$/g or less, and further preferably 8.7 $m^2$/g or more and 14.0 $m^2$/g or less.

The positive electrode material may have a tap density of 0.8 $g/cm^3$ or more. The tap density is an index of the packing density inside the battery, and the value of 0.8 $g/cm^3$ or more therefor can sufficiently enhance the charge and discharge capacity per unit volume. The tap density is preferably 1.1 $g/cm^3$ or more. The upper limit of the tap density is not particularly limited, and for example, may be 3.0 $g/cm^3$ or less.

The tap density is preferably 2.0 $g/cm^3$ or less, and more preferably 1.2 $g/cm^3$ or less.

The positive electrode material may have an NMP (N-methyl-2-pyrrolidone) absorption amount of 40 mL/100 g or less. The NMP absorption amount is an index of the void volume in the positive electrode material, and the NMP absorption amount of 40 mL/100 g or less can restrict the void volume to enhance the packing density inside the battery. The lower limit of the NMP absorption amount is not particularly limited, and from the standpoint of improving the contact with the electrolyte, may be 20 mL/100 g or more. From this standpoint, the NMP absorption amount is preferably 26 mL/100 g or more and 40 mL/100 g or less, more preferably 33 mL/100 g or more and 40 mL/100 g or less, and further preferably 37 mL/100 g or more and 40 mL/100 g or less.

The NMP absorption amount can be measured according to JIS K6217-4:2017 provided that NMP is used instead of dibutyl phthalate (DBP).

The positive electrode material may have a powder compact density obtained by compacting under application of a pressure of 16 kN of 2.4 g/cm$^3$ or more. In this case, a positive electrode having a high density can be formed, and the charge and discharge capacity per unit volume of the battery can be sufficiently enhanced. The powder compact density may be 3.0 g/cm$^3$ or less while not particularly limited.

The measurement method of the powder compact density is not particularly limited, and may be, for example, such a manner that a prescribed amount of a specimen is placed in a mold having an inner diameter of 20 mm, and applied with a load of 16 kN, the volume of the specimen is calculated from the height of the specimen under application of the load, and the mass of the specimen is divided by the volume thereof to provide the powder compact density.

[Method for producing Positive Electrode Material for Lithium Ion Secondary Battery]

The method for producing a positive electrode material for a lithium ion secondary battery of the present embodiment is a method for producing the positive electrode material for a lithium ion secondary battery of the present embodiment described above, and includes a crystallizing step, a water rinsing step, a mixing step, and a baking step. In the following description, the method for producing a positive electrode material for a lithium ion secondary battery of the present embodiment may be referred simply to as a "present production method".

The steps of the present production method will be described below, in which the descriptions for the items having been described may be omitted in some cases.

(Crystallizing Step)

In the crystallizing step, a crystallization reaction is performed with a metal source having a valence number of 2, 3, or both, and a phosphoric acid source, providing crystallized particles. The crystallized particles obtained are generally a complex metal phosphate compound. In the crystallizing step, furthermore, one or more selected from the group consisting of a Ca source and an Al source is added during the crystallization, so as to allow at least one kind of calcium phosphate ($Ca_3(PO_4)_2$) particles and aluminum phosphate ($AlPO_4$) particles to exist on a surface of primary particles of the resulting crystallized particles, a grain boundary among the primary particles, or both the surface and the grain boundary. A part of Ca and Al may be dissolved in the crystallized particles.

A raw material solution having the metal source and the phosphoric acid source dissolved therein as coexisting ions is added to a reaction aqueous solution regulated to have a pH of 7 to 10 at a liquid temperature of 25°C, and coprecipitated. The raw material solution shows acidity, and therefore, the raw material solution is added in a dropwise manner while retaining the pH of the reaction aqueous solution within the aforementioned range by adding an alkali thereto in a dropwise manner, and thereby the crystallized particles can be obtained as a coprecipitated matter.

The raw material solution having the metal source and the phosphoric acid source dissolved therein has a uniform composition, and in the dropwise addition thereof to the reaction aqueous solution regulated to have a pH of 7 to 10, preferably 7 to 9, at a liquid temperature of 25°C, the crystallized particles having a uniform composition can be obtained through regulation of the ratio of the metal and phosphoric acid.

The mass ratio of the metal and phosphoric acid in the positive electrode active substance obtained in the present production method, i.e., the LFP, becomes substantially the same as the crystallized particles. The mass ratio of the metal and phosphorus of the crystallized particles becomes substantially the same as the raw material solution. Therefore, the composition of the target LFP can be regulated by regulating the composition of the raw material solution. The mass ratio of iron and phosphoric acid may be 1 as similar to the composition of the target LFP, and may be approximately 0.9 to 1.1 in consideration of the influence of the additive element and impurities.

The metal source used may be a water soluble salt, which is preferably a sulfate, of a divalent or trivalent metal. Examples of the metal source used include iron sulfate, magnesium sulfate, zinc sulfate, cobalt sulfate, nickel sulfate, titanium sulfate, and vanadium sulfate. A hydroxide soluble in an acid can also be used.

Only one kind of the metal source may be used alone, or two or more kinds thereof may be mixed and used, and only one kind thereof is preferably used.

It suffices that the phosphoric acid source is water soluble, and a phosphoric acid compound can be used, in which orthophosphoric acid ($H_3PO_4$), ammonium dihydrogen phosphate ($NH_4H_2PO_4$), diammonium hydrogen phosphate ($(NH_4)_2HPO_4$), and the like, which are less likely to be contaminated with impurities, can be preferably used.

Only one kind of the phosphoric acid source may be used alone, or two or more kinds thereof may be mixed and used, and only one kind thereof is preferably used.

In the preparation of the raw material solution, an oxidizing agent, such as a hydrogen peroxide ($H_2O_2$) aqueous solution, may be added to the reaction aqueous solution for regulating the valence number of the metal source in the raw material solution. The amount of the oxidizing agent added is not particularly limited, and may be in a range of 0.3 time to 3.0 times the amount of the metal source.

Only one kind of the oxidizing agent may be used alone, or two or more kinds thereof may be mixed and used.

For regulating the pH of the reaction aqueous solution, one or more kinds selected from the group consisting of sodium hydroxide and lithium hydroxide may be used as an alkali source.

Only one kind of the alkali source may be used alone, or two or more kinds thereof may be mixed and used.

In addition to the alkali source, a complexing agent may be added to the reaction aqueous solution. The complexing agent is not particularly limited, and may be a material capable of forming a complex with an iron ion or other metal ions in the aqueous solution, and examples thereof include an ammonium ion donor.

Only one kind of the complexing agent may be used alone, or two or more kinds thereof may be mixed and used.

The ammonium ion donor is not particularly limited, and examples thereof used include ammonia, ammonium sulfate, ammonium chloride, ammonium carbonate, and ammonium fluoride. The ammonium ion concentration in the reaction aqueous solution may be in a range of 3 g/L to 25 g/L.

Only one kind of the ammonium ion donor may be used alone, or two or more kinds thereof may be mixed and used.

It is also possible that the alkali source and the complexing agent are mixed and added as a buffer solution to the reaction aqueous solution.

In the crystallizing step, the Ca source, the Al source, or both the Ca source and the Al source are added to the reaction aqueous solution. In this manner, at least one kind of calcium phosphate ($Ca_3(PO_4)_2$) particles and aluminum phosphate ($AlPO_4$) particles can be allowed to exist on the surface of the primary particles of the resulting crystallized particles, the grain boundary among the primary particles, or both the surface and the grain boundary.

The Ca source in the form of an aqueous solution may be separately added to the reaction aqueous solution, or may be added to the raw material solution. In this case, the Ca source used may be calcium hydroxide or the like. In the case where the phosphoric acid source or the metal source contains Ca as an impurity, Ca contained in the phosphoric acid source or the metal source may be utilized. Accordingly, the addition method of the Ca source is not limited, and Ca can be contained in the crystallized particles in the prescribed amount, for example, providing a Ca content in the target LFP of 100 ppm by mass to 5,000 ppm by mass.

As similar to the Ca source, the addition method of the Al source is not limited, and Al can be contained in the crystallized particles in the prescribed amount, for example, providing an Al content in the target LFP of 100 ppm by mass to 5,000 ppm by mass.

Examples of the Al source used include aluminum hydroxide, aluminum sulfate, and sodium aluminate.

For each of the Ca source and the Al source independently, only one kind thereof may be used alone, or two or more kinds thereof may be mixed and used.


[Water Rinsing Step]

In the water rinsing step, the crystallized particles obtained in the crystallizing step are rinsed with water, and dried, so as to provide a precursor of the positive electrode active substance.

In the following description, the precursor of the positive electrode active substance may be referred simply to as a "precursor".

It suffices that the water rinsing can reduce the impurities, and the water rinsing can be performed by an ordinary method. For example, the crystallized particles can be rinsed with water in such a manner that the crystallized particles are mixed with any of pure water, distilled water, and ion exchanged water, which are free of impurity contamination, followed by agitating, and then solid-liquid separation is performed.

The drying is also not particularly limited, and from the standpoint of preventing oxidation of the crystallized particles, the crystallized particles can be dried in a non-oxidizing atmosphere, such as a vacuum atmosphere or an inert gas atmosphere.

The compositional ratio of the metal element and phosphoric acid of the precursor obtained through the water rinsing step is inherited in the composition of the target positive electrode active substance, and therefore the mixing ratio of the metal source and the phosphoric acid source used in the crystallizing step can be determined to achieve the target composition. Specifically, for example, it is preferred that iron (Fe), the element A (A), and phosphoric acid ($PO_4$) are contained in a mass ratio of $Fe/A/PO_4 = y/1-y/1 + \alpha$, in which y satisfies $0.2 < y \leq 1.0$, $\alpha$ satisfies $-0.1 \leq \alpha \leq 0.1$, and the element A is at least one kind of an additive element selected from the group consisting of Mg, Zn, Co, Mn, Ni, Ti, and V. At least one kind of calcium phosphate ($Ca_3(PO_4)_2$) particles and aluminum phosphate ($AlPO_4$) particles exist on the surface of the primary particles of the precursor, the grain boundary among the primary particles, or both the surface and the grain boundary. A part of Ca and Al may be dissolved in the precursor.

The precursor may also be expressed by, for example, the general formula $Fe_yA_{1-y}(PO_4)_{1+\alpha}$. In the formula, y, $\alpha$, and the element M have been described, and the descriptions thereof are omitted herein.

(Mixing Step)

In the mixing step, the precursor of the positive electrode active substance obtained through the water rinsing step, a lithium source, and a carbon source are mixed, so as to provide a raw material mixture.

It is preferred that the precursor and the lithium source are mixed in such a manner that the ratio x (Li/Me) of the number of atoms of lithium (Li) and the number of atoms of the metal (Me) other than lithium in the resulting LFP is more than 0.9 and less than 1.1.

The ratio x is substantially not changed before and after the baking step described later, and therefore the ratio x of the raw material mixture to be subjected to the baking step is substantially identical to the ratio Li/Me of the resulting LFP. Accordingly, in the mixing step, the materials are preferably mixed in such a manner that the resulting LFP has the target ratio x.

The ratio x may be decreased slightly due to evaporation of lithium in the baking step or the like. Accordingly, the ratio x in the mixing step is preferably larger than the ratio x of the target LFP by the decrement of the ratio x. The decrement of the ratio x becomes substantially constant depending on the baking condition, and therefore can be easily obtained by a preliminary test or the like.

The lithium source is not particularly limited, and may be lithium carbonate, lithium hydroxide, lithium sulfate, or the like, in which lithium carbonate and lithium hydroxide, which are free of impurity contamination, can be preferably used.

Only one kind of the lithium source may be used alone, or two or more kinds thereof may be mixed and used, and only one kind thereof is preferably used.

Examples of the carbon source include graphite, such as natural graphite and artificial graphite, a carbon black material, such as acetylene black and Ketjen Black, carbon fibers, and an organic compound forming a carbonaceous material through decomposition, such as sucrose and ascorbic acid, and only one kind thereof may be used alone, or two or more kinds thereof may be used.

Only one kind of the carbon source may be used alone, or two or more kinds thereof may be mixed and used.

The amount of the carbon source mixed is not particularly limited, as long as being an amount that the LFP is coated with the conductive carbonaceous film, and may be mixed with the LFP in an amount of 1 to 5% by mass in terms of carbon amount.

The mixing means in mixing the precursor and the lithium compound in the mixing step may be an ordinary mixer, and for example, a shaker mixer, a Loedige mixer, a Julia mixer, a V-blender, or the like may be used.

(Baking Step)

In the baking step, the raw material mixture obtained through the mixing step is baked in a non-oxidizing atmosphere, so as to provide the positive electrode material containing the positive electrode active substance.

In the baking step, the baking temperature in baking the raw material mixture, i.e., the maximum temperature set to the baking furnace, is not particularly limited, and for example, is preferably 600°C to 850°C, and more preferably 600°C to 750°C.

In the case where the baking temperature is 600°C or more, the diffusion of lithium in the precursor can be sufficiently achieved to make the crystal structure of the resulting LFP particularly uniform, and the use thereof as a positive electrode active substance can sufficiently enhance the battery characteristics. Furthermore, the reaction of the lithium source and the precursor can be sufficiently performed, and thereby the excessive lithium remaining and the unreacted precursor particles remaining can be further suppressed.

The retention time at the baking temperature may be, for example, 0.5 hour to 12 hours, and preferably 2 hours to 6 hours.

In the present production method, the phosphate particles exist on the surface and the grain boundary of the primary particles of the precursor, and are not reacted with the lithium source and the like in baking, but remain in the state of the phosphate particles. Accordingly, the phosphate particles can retard the progress of sintering of the primary particles, and coarse particles are suppressed from forming.

The retention time at the baking temperature is not particularly limited, and may be an ordinary condition in baking the LFP.

The atmosphere in baking is not particularly limited, as long as being a non-oxidizing atmosphere, and for example, an inert atmosphere, such as nitrogen, or a reducing atmosphere may be used.

The atmosphere in baking therein is the atmosphere except for the gas formed through the reaction in baking, and for example, may be an atmospheric gas supplied to the baking furnace.

In the baking step, calcination may be performed at a temperature lower than the baking temperature. The calcination temperature may be, for example, 350°C to 550°C, and preferably 400°C to 500°C.

The retention time at the calcination temperature may be, for example, 0.5 hour to 12 hours, and preferably 2 hours to 6 hours.

After the calcination, the baking may be performed after cooling once, or the baking step may be performed continuously by increasing the temperature from the calcination temperature to the baking temperature.

The atmosphere in the calcination is not particularly limited, and may be, for example, the same atmosphere as the baking step.

The baking furnace is not particularly limited, and for example, a furnace capable of baking the raw material mixture in an inert atmosphere or a reducing atmosphere can be used. An electric furnace generating no gas is preferably used from the standpoint of retaining the atmosphere in the furnace uniform, and any of a batch type and continuous type furnaces can be used. Any of a furnace baking the raw material mixture housed in a baking vessel and a furnace baking the raw material mixture fluidized can be used. From the standpoint of enhancing the productivity, a continuous baking furnace is preferably used in the baking step.

(Cracking Step)

The powder of positive electrode material obtained through the baking step may undergo aggregation or light sintering in some cases. In these cases, the present production method may optionally include a cracking step of cracking the powder after the baking step.

The cracking herein means an operation in which mechanical energy is applied to an aggregate of multiple secondary particles formed through sintering necking among the secondary particles or the like in baking, and thereby the secondary particles are separated from each other with substantially no breakage of the secondary particles, so as to unravel the aggregate. The cracking step is preferably performed by selecting the condition of cracking in such a manner that the positive electrode material after cracking has an average particle diameter, a particle size distribution, and the like within the desired ranges. After cracking, sieving and the like may be performed depending on necessity.

(Composition of Positive Electrode Material)

The composition of the positive electrode material produced by the present production method described above is not particularly limited. The positive electrode material may be a positive electrode material containing the positive electrode active substance including aggregated particles including aggregated multiple primary particles coated with the carbonaceous film, in which

at least one kind of calcium phosphate ($Ca_3(PO_4)_2$) particles and aluminum phosphate ($AlPO_4$) particles exist on the surface of the primary particles of the LFP contained the positive electrode active substance, the grain boundary among the primary particles, or both the surface and the grain boundary, and
the composition of the LFP may contain lithium (Li), iron (Fe), an element A (A), and phosphoric acid ($PO_4$), for example, in a mass ratio of Li/Fe/A/$PO_4$ = x/y/1 - y/1 + $\beta$. For x, y, and $\beta$, it is preferred that x satisfies $0.9 < x < 1.1$, y satisfies $0.2 < y \leq 1.0$, and $\beta$ satisfies $-0.1 \leq \beta \leq 0.1$. The element A may be at least one kind of an additive element selected from the group consisting of Mg, Zn, Co, Mn, Ni, Ti, and V. A part of Ca and Al may be dissolved in the LFP.

The positive electrode active substance may also be expressed by the general formula $Li_xFe_yA_{1-y}(PO_4)_{1+\beta}$. In the formula, x, y, $\beta$, and the element A have been described, and the descriptions thereof are omitted herein.

The present production method described above can provide a positive electrode material containing lithium iron phosphate that has high input and output characteristics in using as a positive electrode of a lithium ion secondary battery.

[Positive Electrode for Lithium Ion Secondary Battery]

The positive electrode for a lithium ion secondary battery of the present embodiment is a positive electrode for a lithium ion secondary battery, including an aluminum collector and a positive electrode mixture layer formed on the aluminum collector, in which
the positive electrode mixture layer contains the positive electrode material for a lithium ion secondary battery of the present embodiment described above.

The positive electrode is a member in the form of a sheet, and is formed, for example, by coating a positive electrode mixture paste containing the positive electrode material described above as a positive electrode active substance on a surface of a collector formed of an aluminum foil (i.e., an aluminum collector), followed by drying.

The positive electrode is appropriately treated corresponding to the battery using the same. For example, a cutting treatment forming into the appropriate size corresponding to the target secondary battery, a pressure compressing treatment by roll press or the like for enhancing the electrode density, and the like are performed.

The positive electrode mixture paste is formed by adding a solvent to the positive electrode mixture, followed by kneading. The positive electrode mixture is formed by mixing the positive electrode material described above in the form of powder, the conductive material, and a binder.

The conductive material is added for imparting appropriate conductivity to the electrode. The conductive material is not particularly limited, and examples thereof used include graphite (such as natural graphite, artificial graphite, and expanded graphite) and a carbon black based material, such as acetylene black and Ketjen Black (registered trade name).

Only one kind of the conductive material may be used alone, or two or more kinds thereof may be mixed and used.

The binder serves a function of binding the positive electrode active substance particles. The binder used in the positive electrode mixture is not particularly limited, and examples thereof used include polyvinylidene fluoride (PVDF), polytetrafluoroethylene (PTFE), fluorine rubber, ethylene-propylene-diene rubber, styrene-butadiene, a cellulose based resin, and polyacrylic acid.

Only one kind of the binder may be used alone, or two or more kinds thereof may be mixed and used.

The positive electrode mixture may contain activated carbon and the like added thereto. The addition of activated carbon and the like can increase the electric double layer capacity of the positive electrode.

The solvent is for dissolving the binder and dispersing the positive electrode active substance, the conductive material, activated carbon, and the like in the binder. The solvent is not particularly limited, and examples thereof used include an organic solvent, such as N-methyl-2-pyrrolidone.

Only one kind of the solvent may be used alone, or two or more kinds thereof may be mixed and used.

The mixing ratio of the substances in the positive electrode mixture paste is not particularly limited. For example, assuming that the solid content of the positive electrode mixture except for the solvent is 100 parts by mass, the content of the positive electrode active substance may be 60 parts by mass to 98 parts by mass, the content of the conductive material may be 1 part by mass to 20 parts by mass, and the content of the binder may be 1 part by mass to 20 parts by mass, as similar to the positive electrode of an ordinary lithium ion secondary battery.

[Lithium Ion Secondary Battery]

In the lithium ion secondary battery of the present embodiment, the positive electrode may contain the positive electrode material of the present embodiment. One configuration example of the battery of the present embodiment will be described below for each of the constitutional elements.

The battery of the present embodiment has a structure that is substantially the same as an ordinary lithium ion secondary battery, except that the positive electrode material obtained through the method for producing a positive electrode material for a lithium ion secondary battery described above is used as the positive electrode material of the positive electrode, more specifically as the positive electrode active substance.

Specifically, the battery of the present embodiment has a structure including a case, and a positive electrode, a negative electrode, a non-aqueous electrolyte, and a separator depending on necessity, housed in the case. More specifically, in the case where a non-aqueous electrolytic solution is used, the secondary battery of the present embodiment is produced in such a manner that a positive electrode and a negative electrode are laminated via a separator to form an electrode assembly, the resulting electrode assembly is impregnated with the non-aqueous electrolytic solution, a collecting lead wire or the like is connected each between the positive electrode collector of the positive electrode and a positive electrode terminal connected to the exterior and between the negative electrode collector of the negative electrode and a negative electrode terminal connected to the exterior, and the components are sealed in a case.

The structure of the secondary battery of the present embodiment is not limited to the example described above. The external shape thereof may be various shapes, such as a cylindrical type and a laminated type. The positive electrode has been described above, and the description thereof is omitted herein.

(Negative Electrode)

The negative electrode is a member in the form of a sheet formed by coating a negative electrode mixture paste on the surface of a metal foil collector, such as copper, followed by drying. The negative electrode is formed in substantially the same method as the positive electrode although the components constituting the negative electrode mixture paste and the formulation thereof, the material of the collector, and the like are different, and may be subjected to various treatments depending on necessity as similar to the positive electrode.

The negative electrode mixture paste is a paste formed by adding an appropriate solvent to the negative electrode mixture obtained by mixing a negative electrode active substance and a binder.

The negative electrode active substance used may be a substance containing lithium, such as metallic lithium or a lithium alloy, or an occlusion substance capable of occluding and discharging lithium ion.

The occlusion substance is not particularly limited, and examples thereof used include natural graphite, artificial graphite, a powder material of an organic compound baked material, such as a phenol resin, and a carbonaceous substance, such as coke. In the case where the occlusion substance is used as the negative electrode active substance, a fluorine-containing resin, such as PVDF, can be used as a binder, and an organic solvent, such as N-methyl-2-pyrrolidone, can be used as a solvent for dispersing the negative electrode active substance in the binder.

(Separator)

The separator is disposed and held between the positive electrode and the negative electrode in the case where a non-aqueous electrolytic solution is used, and has a function of separating the positive electrode and the negative electrode and retaining the electrolyte. Examples of the separator used include a thin film of polyethylene or polypropylene having many fine pores, but are not particularly limited, as long as having the aforementioned function.

(Non-aqueous Electrolyte)

Examples of the non-aqueous electrolyte used include a non-aqueous electrolytic solution.

Examples of the non-aqueous electrolytic solution include a solution obtained by dissolving a lithium salt as a supporting salt in an organic solvent. The non-aqueous electrolytic solution may also be a solution obtained by dissolving a lithium salt in an ionic liquid. The ionic liquid is a salt that is in a liquid form at ordinary temperature (25°C) constituting a cation other than lithium ion and an anion.

Examples of the organic solvent used include a cyclic carbonate, such as ethylene carbonate, propylene carbonate, butylene carbonate, and trifluoropropylene carbonate; a linear carbonate, such as diethyl carbonate, dimethyl carbonate, ethyl methyl carbonate, and dipropyl carbonate; an ether compound, such as tetrahydrofuran, 2-methyltetrahydrofuran, and dimethoxyethane; a sulfur compound, such as ethyl methyl sulfone and butane sultone; and a phosphorus compound, such as triethyl phosphate and trioctyl phosphate.

Only one kind of the organic solvent selected from the aforementioned compound group may be used alone, or two or more kinds thereof may be mixed and used.

Examples of the supporting salt used include $LiPF_6$, $LiBF_4$, $LiClO_4$, $LiAsF_6$, $LiN(CF_3SO_2)_2$, and a complex salt thereof. The non-aqueous electrolytic solution may further contain a radical scavenger, a surfactant, a flame retardant, and the like.

Only one kind of the supporting salt may be used alone, or two or more kinds thereof may be mixed and used.

The non-aqueous electrolyte used may be a solid electrolyte. A solid electrolyte has a capability of withstanding a high voltage. Examples of the solid electrolyte include an inorganic solid electrolyte and an organic solid electrolyte.

Examples of the inorganic solid electrolyte include an oxide based solid electrolyte and a sulfide based solid electrolyte.

The oxide based solid electrolyte is not particularly limited, and for example, a solid electrolyte containing oxygen (O) and having lithium ion conductivity and electron insulating property can be preferably used. Specific examples of the oxide based solid electrolyte include lithium phosphate ($Li_3PO_4$), $Li_3PO_4N_x$, $LiBO_2N_x$, $LiNbO_3$, $LiTaO_3$, $Li_2SiO_3$, $Li_4SiO_4$-$Li_3PO_4$, $Li_4SiO_4$-$Li_3VO_4$, $Li_2O$-$B_2O_3$-$P_2O_5$, $Li_2O$-$SiO_2$, $Li_2O$-$B_2O_3$-$ZnO$, $Li_{1+X}Al_XTi_{2-X}(PO_4)_3$ ($0 \leq X \leq 1$), $Li_{1+X-}Al_XGe_{2-X}(PO_4)_3$ ($0 \leq X \leq 1$), $LiTi_2(PO_4)_3$, $Li_{3X}La_{2/3-X}TiO_3$ ($0 \leq X \leq 2/3$), $Li_5La_3Ta_2O_{12}$, $Li_7La_3Zr_2O_{12}$, $Li_6BaLa_2Ta_2O_{12}$, and $Li_{3.6}Si_{0.6}P_{0.4}O_4$. One or more kinds of the oxide based solid electrolyte selected from the group consisting of the aforementioned materials may be used.

The sulfide based solid electrolyte is not particularly limited, and for example, a solid electrolyte containing sulfur (S) and having lithium ion conductivity and electron insulating property can be preferably used. Specific examples of the sulfide based solid electrolyte include $Li_2S$-$P_2S_5$, $Li_2S$-$SiS_2$, $LiI$-$Li_2S$-$SiS_2$, $LiI$-$Li_2S$-$P_2S_5$, $LiI$-$Li_2S$-$B_2S_3$, $Li_3PO_4$-$Li_2S$-$Si_2S$, $Li_3PO_4$-$Li_2S$-$SiS_2$, $LiPO_4$-$Li_2S$-$SiS$, $LiI$-$Li_2S$-$P_2O_5$, and $LiI$-$Li_3PO_4$-$P_2S_5$. One or more kinds of the sulfide based solid electrolyte selected from the group consisting of the aforementioned materials may be used.

The inorganic solid electrolyte used may be a material other than the above, and examples thereof used include $Li_3N$, $LiI$, and $Li_3N$-$LiI$-$LiOH$.

The organic solid electrolyte is not particularly limited, as long as being a polymer compound showing ionic conductivity, and examples thereof used include polyethylene oxide, polypropylene oxide, and a copolymer thereof. The organic solid electrolyte may contain a supporting salt (lithium salt).

Only one kind of the organic solid electrolyte may be used alone, or two or more kinds thereof may be used.

(Shape and Configuration of Secondary Battery)

As described above, the battery of the present embodiment can be in various shapes, such as a cylindrical type and a laminated type. In any shape used, in the case where the secondary battery of the present embodiment uses a non-aqueous electrolytic solution as the non-aqueous electrolyte, it is possible that the positive electrode and the negative electrode are laminated via the separator to form an electrode assembly. The resulting electrode assembly is impregnated with the non-aqueous electrolytic solution, a collecting lead wire or the like is connected each between the positive electrode collector and a positive electrode terminal connected to the exterior and between the negative electrode collector and a negative electrode terminal connected to the exterior, and the components are housed in a battery case to provide a sealed structure.

The battery according to the present embodiment is not limited to an embodiment using a non-aqueous electrolytic solution as a non-aqueous electrolyte, and for example, may be a secondary battery using a solid non-aqueous electrolyte, i.e., an all-solid-state battery. In the case where an all-solid-state battery is produced, the configuration other than the positive electrode material may be appropriately changed depending on necessity.

As described above, the battery according to the present embodiment uses the positive electrode material according to the present embodiment as a material of the positive electrode, and thereby is excellent in the battery capacity and the input and output characteristics. Consequently, the battery according to the present embodiment can be favorably used as a rechargeable battery for a mobile information terminal, such as a mobile phone, a smartphone, a tablet computer, and a notebook computer, a mobile music player, a digital camera, a clinical instrument, and a clean energy vehicle, such as a hybrid electric vehicle (HEV), an electric vehicle (EV), and a plug-in hybrid electric vehicle (PHEV), and the like.

Examples

The present embodiment will be described more specifically with reference to examples below. However, the present embodiment is not limited to the examples below.

1. Evaluation Methods

In Examples and Comparative Example below, the evaluation was performed in the following methods.

(1) Analysis of Composition

The composition of the positive electrode material was measured by the ICP emission spectroscopy.

(2) Crystallite Diameter of Positive Electrode Material

The diffraction pattern was measured with an X-ray diffraction apparatus under the following measurement condition.

    Radiation source: Cu-K$\alpha$
    Step size: 0.01°/step
    Scanning rate: 3 sec/step

In the measured diffraction pattern, the full width at half maximum (B) of the peak within a range of 2θ of 28.8 to 30.8° was used, and the crystallite diameter was calculated according to the following expressions (i) and (ii).

$$\text{Crystallite diameter (nm)} = \{0.9 \times 1.5418 \times 0.1\}/\{\beta \times \cos((29.78/2) \times \pi/2)\} \quad \text{(i)}$$

$$\beta = (B - b) \quad \text{(ii)}$$

In the expressions, B represents the full width at half maximum of the peak within a range of 2θ of 28.8 to 30.8° in the diffraction pattern measured for the positive electrode active substance particles, and b represents the full width at half maximum of the standard specimen Si (2θ = 47.3°).

(3) Specific Surface Area

The specific surface area of the positive electrode material was measured by the one-point BET method by nitrogen gas adsorption.

(4) Tap Density

The tap density of the positive electrode material was measured after shaking the specimen container housing the positive electrode material 500 times with a tapping machine (KRS-409, available from Kuramochi Scientific Instruments Co., Ltd.).

(5) NMP Absorption Amount of Positive Electrode Material

The NMP absorption amount was measured according to JIS K6217-4:2017 provided that NMP was used instead of dibutyl phthalate (DBP).

(6) Powder Compact Density of Positive Electrode Material

3 g of the specimen was placed in a mold having an inner diameter of 20 mm, and the surface of the specimen was flattened by vibrating the mold several times. An operation of applying a preliminary load of 10 kN to the mold and releasing the load was repeated three times, and then a load of 16 kN was further applied to the mold. The volumes of the specimen were calculated from the heights of the specimen under application of the load and under releasing the load not applied with the load, and the compression densities under application of pressure and without application of pressure were obtained.

(7) Production of Battery for Evaluation and Evaluation of Battery Characteristics

A coin type secondary battery 10 (see Fig. 1) for evaluation was produced, and the battery characteristics (i.e., the load characteristics and the direct current resistance) were evaluated. The production method of the coin type secondary battery 10 and the evaluation method of the battery characteristics are as follows.

(Production of Positive Electrode)

The positive electrode material, polyvinylidene fluoride (PVdF) as a binder, and acetylene black (AB) as a conductive auxiliary agent were mixed at a mass ratio of positive electrode material/PVdF/AB = 90/5/5 to provide a mixture. N-methyl-2-pyrrolidone (NMP) as a solvent was added to the mixture for imparting fluidity to provide a slurry.
The slurry was then coated on an aluminum (Al) foil having a thickness of 30 $\mu$m (collector), and dried in vacuum at 120°C for 12 hours. Thereafter, the collector was cut into a strip having a coated width of 35 mm, and repeatedly compressed twice with a roll pressing machine at a roll gap of 5 $\mu$m, a roll feed speed of 0.5 m/min, so as to produce a positive electrode for Examples and Comparative Example.

(Production of Lithium Ion Secondary Battery)

As shown in Fig. 1, a coin type secondary battery 10 is constituted by a case 11 and an electrode 12 housed in the case 11.
The case 11 has a positive electrode canister 111 with a hollow and one end open and a negative electrode canister 112 disposed at the opening of the positive electrode canister 111, and is constituted to provide a space for housing the electrode 12 between the negative electrode canister 112 and the positive electrode canister 111 by disposing the negative electrode canister 112 at the opening of the positive electrode canister 111.
The electrode 12 includes a positive electrode 121, a separator 122, and a negative electrode 123, which are laminated in this order, and is housed in the case 11 in such a manner that the positive electrode 121 is brought into contact with the inner surface of the positive electrode canister 111, and the negative electrode 123 is brought into contact with the inner surface of the negative electrode canister 112.
The case 11 has a gasket 113, and with the gasket 113, the positive electrode canister 111 and the negative electrode canister 112 are fixed in a non-contact state, i.e., the relative movement thereof is restricted to retain the electric insulation therebetween. The gasket 113 also has a function of sealing the gap between the positive electrode canister 111 and the negative electrode canister 112, and thereby the interior of the case 11 and the exterior are sealed from each other airtightly and liquid-tightly.
The coin type secondary battery 10 was produced in the following manner.
The resulting positive electrode was punched out into a disk shape of 2 cm$^2$ to provide a positive electrode 121. A lithium metal plate was punched out in the similar manner as the positive electrode 121 to provide a negative electrode 123.
In a globe box with an Ar gas atmosphere regulated to have a dew point of -80°C, a separator 122 formed of porous polypropylene having a thickness of 25 $\mu$m was held between the positive electrode and the negative electrode,

13

which were disposed inside a coin type battery case 11 having a diameter of 2 cm and a thickness of 3.2 mm.

Thereafter, $LiPF_6$ was dissolved at a concentration of 1 mol/$dm^3$ in a solution obtained by mixing ethylene carbonate (EC) and diethyl carbonate (DEC) in a ratio of EC/DEC = 50/50 (% by volume) to provide an electrolytic solution, which was charged in the coin type battery case 11, followed by sealing, so as to provide a lithium ion secondary battery (coin type secondary battery 10) for evaluating the battery characteristics.

(Evaluation of Lithium Ion Secondary Battery)

The resulting coin type secondary battery 10 was evaluated in the following manner.

(Load Characteristics (Discharge Capacity Ratio))

A charge and discharge test of the coin type secondary battery 10 was performed in the following manner. The battery was charged and discharged repeatedly three times at a cutoff voltage of 2.0 V to 4.1 V and a constant current of 0.1 C at room temperature (25°C), and the discharge capacity of the third time was designated as the discharge capacity at 0.1 C. The battery was then charged at a cutoff voltage of 2.0 V to 4.1 V and 0.1 C, and discharged at 3 C.

The ratio of the discharge capacity at 3 C and the discharge capacity at 0.1 C thus measured was designated as the load characteristics calculated according to the following expression (2).

$$\text{Load characteristics (\%)} = (3 \text{ C discharge capacity}/0.1 \text{ C discharge capacity}) \times 100$$

$$(2)$$

(Direct Current Resistance (DCR))

At room temperature (25°C), the coin type battery 10 regulated to have a state of charge (SOC) of 50% at a charge rate of 0.1 C was alternately charged and discharged each for 10 seconds at rates of 1 C, 3 C, 5 C, and 10 C, and the current values and the voltage values after 10 seconds of each rate were plotted on the abscissa and the ordinate respectively, in which the gradient of the approximate line by the least square method was designated as the input DCR in charging and the output DCR in discharging. A break period of 10 minutes was provided in each of the time of changing the energizing direction at each current and the time of changing the energizing current.

[Example 1]

(Production of Precursor of Positive Electrode Active Substance)

279 g of $FeSO_4 \cdot 7H_2O$ as a Fe source was dissolved in pure water. 131 g of $H_3PO_4$ (75% aqueous solution) as a P source and 0.42 g of $Ca(OH)_2$ were added and dissolved therein. 170 g of $H_2O_2$ (30% w/v aqueous solution) as an oxidizing agent and pure water for controlling the concentration were added to the mixed aqueous solution to provide a raw material solution. Sodium hydroxide (30% by mass aqueous solution) and aqueous ammonia (28% by mass aqueous solution) were mixed at a molar ratio of 1/1 to provide a buffer solution.

Pure water was placed in a reaction vessel equipped with an agitator and a pH sensor, to which the buffer solution and the raw material solution each were added under agitation in such a manner that the pH at 25°C of the reaction aqueous solution in the reaction vessel was in a range of 8.0 to 8.5. After adding the entire amount of the prepared raw material solution, the agitation was continued for 30 minutes to complete the progress of the reaction.

After completing the reaction, the reaction aqueous solution was filtered, and rinsed and dehydrated with distilled water multiple times to provide crystallized particles in a cake form. The crystallized particles were dried in vacuum at 50°C for 24 hours to provide precursor powder ($FePO_4$) of the positive electrode active substance.

The observation of the resulting precursor with a scanning electron microscope confirmed that the precursor was constituted by secondary particles formed through aggregation of primary particles of $FePO_4$, and fine $Ca_3(PO_4)_2$ particles of 10 nm to 300 nm existed on the particle surface of the primary particles.

(Production and Evaluation of Positive Electrode Material)

The resulting precursor powder and lithium hydroxide (LiOH) as a Li source were mixed at a mass ratio of Li and Fe of Li/Fe = 1.02. Sucrose powder in an amount of 2.5% by mass in terms of carbon amount with respect to the positive electrode material to be produced was further mixed therein to provide a raw material mixture.

The resulting raw material mixture was then heat-treated in a nitrogen atmosphere at 700°C for 5 hours, so as to perform the synthesis of the positive electrode active substance and the support of carbon on the particle surface of the positive electrode active substance, thereby producing a positive electrode material for a lithium ion secondary battery of Example 1.

The X-ray diffraction analysis of the resulting positive electrode material confirmed that the LFP was formed as a positive electrode active substance. Also, the observation of the resulting positive electrode material with a scanning electron microscope confirmed that the positive electrode material was constituted by the positive electrode active substance formed of secondary particles formed through aggregation of the primary particles of the LFP, and fine calcium phosphate ($Ca_3(PO_4)_2$) particles of 10 nm to 300 nm were retained from the precursor and existed on the particle surface of the primary particles.

It was also confirmed that the composition of the resulting positive electrode material was a mass ratio of $Li/Fe/PO_4 = 1.02/1/1$. The evaluation results of the positive electrode material are shown in Table 1.

[Example 2]

A positive electrode material for a lithium ion secondary battery of Example 2 was produced and evaluated in the same manner as in Example 1 except that in the production of the precursor of the positive electrode active substance, 0.65 g of $Al(OH)_3$ was mixed instead of $Ca(OH)_2$.

The X-ray diffraction analysis of the resulting positive electrode material confirmed that the LFP was formed as a positive electrode active substance. Also, the observation of the resulting positive electrode material with a scanning electron microscope confirmed that the positive electrode material was constituted by the positive electrode active substance formed of secondary particles formed through aggregation of the primary particles of the LFP, and fine aluminum phosphate ($AlPO_4$) particles of 10 nm to 400 nm were retained from the precursor and existed on the particle surface of the primary particles.

It was also confirmed that the composition of the resulting positive electrode material was a mass ratio of $Li/Fe/PO_4 = 1.02/1/1$. The evaluation results of the positive electrode material are shown in Table 1.

[Example 3]

A positive electrode material for a lithium ion secondary battery of Example 3 was produced and evaluated in the same manner as in Example 1 except that in the production of the precursor of the positive electrode active substance, 0.14 g of $Ca(OH)_2$ and 0.22 g of $Al(OH)_3$ were mixed.

The X-ray diffraction analysis of the resulting positive electrode material confirmed that the LFP was formed as a positive electrode active substance. Also, the observation of the resulting positive electrode material with a scanning electron microscope confirmed that the positive electrode material was constituted by the positive electrode active substance formed of secondary particles formed through aggregation of the primary particles of the LFP, and fine calcium phosphate ($Ca_3(PO_4)_2$) particles and fine aluminum phosphate ($AlPO_4$) particles of 10 nm to 350 nm were retained from the precursor and existed on the particle surface of the primary particles.

It was also confirmed that the composition of the resulting positive electrode material was a mass ratio of $Li/Fe/PO_4 = 1.02/1/1$. The evaluation results of the positive electrode material are shown in Table 1.

[Example 4]

A positive electrode material for a lithium ion secondary battery of Example 4 was produced and evaluated in the same manner as in Example 1 except that in the production of the precursor of the positive electrode active substance, 0.70 g of $Ca(OH)_2$ was mixed.

The X-ray diffraction analysis of the resulting positive electrode material confirmed that the LFP was formed as a positive electrode active substance. Also, the observation of the resulting positive electrode material with a scanning electron microscope confirmed that the positive electrode material was constituted by the positive electrode active substance formed of secondary particles formed through aggregation of the primary particles of the LFP, and fine calcium phosphate ($Ca_3(PO_4)_2$) particles of 10 nm to 400 nm were retained from the precursor and existed on the particle surface of the primary particles.

It was also confirmed that the composition of the resulting positive electrode material was a mass ratio of $Li/Fe/PO_4 = 1.02/1/1$. The evaluation results of the positive electrode material are shown in Table 1.

[Example 5]

A positive electrode material for a lithium ion secondary battery of Example 5 was produced and evaluated in the same manner as in Example 1 except that in the production of the precursor of the positive electrode active substance, 0.42 g of $Ca(OH)_2$ and 0.22 g of $Al(OH)_3$ were mixed.

The X-ray diffraction analysis of the resulting positive electrode material confirmed that the LFP was formed as a positive electrode active substance. Also, the observation of the resulting positive electrode material with a scanning electron microscope confirmed that the positive electrode material was constituted by the positive electrode active substance formed of secondary particles formed through aggregation of the primary particles of the LFP, and fine calcium phosphate $(Ca_3(PO_4)_2)$ particles and fine aluminum phosphate $(AlPO_4)$ particles of 10 nm to 400 nm were retained from the precursor and existed on the particle surface of the primary particles.

It was also confirmed that the composition of the resulting positive electrode material was a mass ratio of $Li/Fe/PO_4$ = 1.02/1/1. The evaluation results of the positive electrode material are shown in Table 1.

[Comparative Example 1]

A positive electrode material for a lithium ion secondary battery of Comparative Example 1 was produced and evaluated in the same manner as in Example 1 except that in the production of the precursor of the positive electrode active substance, $Ca(OH)_2$ was not mixed.

The X-ray diffraction analysis of the resulting positive electrode material confirmed that the LFP was formed as a positive electrode active substance. Also, the observation of the resulting positive electrode material with a scanning electron microscope confirmed that the positive electrode material was constituted by the positive electrode active substance formed of secondary particles formed through aggregation of the primary particles of the LFP.

It was also confirmed that the composition of the resulting positive electrode material was a mass ratio of $Li/Fe/PO_4$ = 1.02/1/1. The evaluation results of the positive electrode material are shown in Table 1.

[Table 1]

| Table 1 | | | | | | | |
|---|---|---|---|---|---|---|---|
| | Positive electrode material | | | | | | |
| | Ca content (ppm by mass) | Al content (ppm by mass) | Crystallite diameter (nm) | Specific surface area (m²/g) | Tap density (g/cm³) | NMP absorption amount (mL/100 g) | Powder compact density (g/cm³) |
| Example 1 | 1,120 | 0 | 112 | 8.6 | 1.2 | 32 | 2.5 |
| Example 2 | 0 | 1,200 | 110 | 9.1 | 1.2 | 33 | 2.4 |
| Example 3 | 380 | 430 | 132 | 6.3 | 1.2 | 28 | 2.5 |
| Example 4 | 1,940 | 0 | 85 | 13.5 | 1.1 | 38 | 2.4 |
| Example 5 | 1,130 | 450 | 105 | 11.3 | 1.2 | 36 | 2.4 |
| Comparative Example 1 | 0 | 0 | 163 | 5.0 | 1.3 | 25 | 2.5 |

Table 1 (continued)

| | Lithium ion secondary battery | | |
|---|---|---|---|
| | Load characteristics (%) | Input DCR (Ω) | Output DCR (Ω) |
| Example 1 | 89 | 8.9 | 6.7 |
| Example 2 | 91 | 8.7 | 6.9 |
| Example 3 | 88 | 9.3 | 7.7 |
| Example 4 | 94 | 8.2 | 6.4 |
| Example 5 | 92 | 8.6 | 6.7 |
| Comparative Example 1 | 75 | 10.7 | 8.8 |

As shown in Table 1, it is confirmed that Examples 1 to 5 are superior in the load characteristics and the direct current resistance to Comparative Example 1. In Comparative Example 1, fine calcium phosphate $(Ca_3(PO_4)_2)$ particles and fine aluminum phosphate $(AlPO_4)$ particles do not exist, and the specific surface area thereof is lower than Examples 1 to 5, from which it is considered that the sintering of the primary particles proceeds. As described above, it is conformed that the positive electrode material and the production method of the present embodiment can provide a positive electrode material containing lithium iron phosphate that has high input and output characteristics in using as a positive electrode of a lithium ion secondary battery.

Reference Signs List

10: Coin type secondary battery
11: Case
111: Positive electrode canister
112: Negative electrode canister
113: Gasket
12: Electrode
121: Positive electrode
122: Separator
123: Negative Electrode

**Claims**

1. A positive electrode material for a lithium ion secondary battery, comprising aggregated particles comprising aggregated multiple primary particles of a positive electrode active substance coated with a carbonaceous film,

   wherein the positive electrode active substance comprises lithium iron phosphate, the lithium iron phosphate comprising lithium (Li), iron (Fe), and a metal element A (A) in a mass ratio of Li/Fe/A = x/y/1 - y, in which x satisfies $0.9 < x < 1.1$, y satisfies $0.2 < y \leq 1.0$, and the metal element A is at least one kind of an additive element selected from the group consisting of Mg, Zn, Co, Mn, Ni, Ti, and V, and
   wherein the positive electrode material comprises at least one kind of calcium phosphate ($Ca_3(PO_4)_2$) particles and aluminum phosphate ($AlPO_4$) particles existing on a surface of the primary particles of the positive electrode active substance, a grain boundary among the primary particles, or both the surface and the grain boundary.

2. The positive electrode material for a lithium ion secondary battery according to claim 1, wherein the positive electrode material has a Ca content of 100 ppm by mass or more and 5,000 ppm by mass or less, and the positive electrode material has an Al content of 100 ppm by mass or more and 5,000 ppm by mass or less.

3. The positive electrode material for a lithium ion secondary battery according to claim 1 or 2, wherein the positive electrode material has a crystallite diameter of 80 nm or more and 150 nm or less, and a specific surface area of 6.0 $m^2/g$ or more and 14.0 $m^2/g$ or less.

4. The positive electrode material for a lithium ion secondary battery according to claim 1 or 2, wherein the positive electrode material has a tap density of 0.8 $g/cm^3$ or more, an NMP absorption amount of 40 mL/100 g or less, and a powder compact density obtained by compacting the positive electrode material into a circular shape having a diameter of 20 mm under application of a pressure of 16 kN of 2.4 $g/cm^3$ or more.

5. A method for producing the positive electrode material for a lithium ion secondary battery according to claim 1 or 2, comprising

   a crystallizing step of preforming crystallization reaction with a metal source having a valence number of 2, 3, or both, and a phosphoric acid source, so as to provide crystallized particles,
   a water rinsing step of water rinsing and drying the crystallized particles, so as to provide a precursor of the positive electrode active substance,
   a mixing step of mixing the precursor of the positive electrode active substance, a lithium source, and a carbon source, so as to provide a raw material mixture, and
   a baking step of baking the raw material mixture in a non-oxidizing atmosphere, so as to provide the positive electrode material comprising the positive electrode active substance;
   wherein the crystallizing step comprises adding one or more selected from the group consisting of a Ca source and an Al source during the crystallization, so as to allow at least one kind of calcium phosphate $(Ca_3(PO_4)_2)$ particles and aluminum phosphate $(AlPO_4)$ particles to exist on a surface of primary particles of the resulting crystallized particles, a grain boundary among the primary particles, or both the surface and the grain boundary.

6. A positive electrode for a lithium ion secondary battery, comprising an aluminum collector and a positive electrode mixture layer formed on the aluminum collector,
wherein the positive electrode mixture layer comprises the positive electrode material for a lithium ion secondary battery according to claim 1 or 2.

7. A lithium ion secondary battery comprising at least a positive electrode, a negative electrode, and an electrolyte, wherein the positive electrode is the positive electrode for a lithium ion secondary battery according to claim 6.

[Fig. 1]

## INTERNATIONAL SEARCH REPORT

| International application No. |
| --- |
| **PCT/JP2023/025739** |

| | |
| --- | --- |
| **A. CLASSIFICATION OF SUBJECT MATTER** | |
| | *H01M 4/58*(2010.01)i; *C01B 25/45*(2006.01)i; *H01M 4/136*(2010.01)i; *H01M 4/36*(2006.01)i; *H01M 4/66*(2006.01)i<br>FI: H01M4/58; C01B25/45 T; C01B25/45 Z; H01M4/136; H01M4/36 C; H01M4/66 A | |
| According to International Patent Classification (IPC) or to both national classification and IPC | |

| | |
| --- | --- |
| **B. FIELDS SEARCHED** | |
| Minimum documentation searched (classification system followed by classification symbols) | |
| H01M4/58; C01B25/45; H01M4/136; H01M4/36; H01M4/66 | |
| Documentation searched other than minimum documentation to the extent that such documents are included in the fields searched | |
| Published examined utility model applications of Japan 1922-1996<br>Published unexamined utility model applications of Japan 1971-2023<br>Registered utility model specifications of Japan 1996-2023<br>Published registered utility model applications of Japan 1994-2023 | |
| Electronic data base consulted during the international search (name of data base and, where practicable, search terms used) | |
| | |

**C. DOCUMENTS CONSIDERED TO BE RELEVANT**

| Category* | Citation of document, with indication, where appropriate, of the relevant passages | Relevant to claim No. |
| --- | --- | --- |
| X | JP 2013-518372 A (PHOSTECH LITHIUM INC) 20 May 2013 (2013-05-20)<br>claims 1, 5-8, 17, paragraphs [0062], [0068], tables 1-2 | 1-4, 6-7 |
| A | claims 1, 5-8, 17, paragraphs [0062], [0068], tables 1-2 | 5 |
| X | CN 108448070 A (SICHUAN UNIVERSITY) 24 August 2018 (2018-08-24)<br>claims 3, 6, paragraph [0032], example 16 | 1, 3-7 |
| A | claims 3, 6, paragraph [0032], example 16 | 2 |
| A | CN 103165882 A (HENAN KELONG GROUP CO., LTD.) 19 June 2013 (2013-06-19)<br>claims 1-4 | 1-7 |
| A | JP 2012-33481 A (QINGHUA UNIV) 16 February 2012 (2012-02-16)<br>claim 1 | 1-7 |
| A | JP 2022-528497 A (JOHNSON MATTHEY PUBLIC LIMITED COMPANY) 13 June 2022<br>(2022-06-13)<br>claims 1, 8-9 | 1-7 |

| ☐ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 September 2023** | **03 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/025739**

| Patent document cited in search report | | | Publication date (day/month/year) | Patent family member(s) | | | Publication date (day/month/year) |
|---|---|---|---|---|---|---|---|
| JP | 2013-518372 | A | 20 May 2013 | US claims 1, 5-8, 17, paragraphs [0073], [0077], tables 1-2 WO EP CA KR TW | 2013/0095390 2011/091525 2529431 2691265 10-2013-0002319 201232899 | A1 A1 A1 A1 A A | |
| CN | 108448070 | A | 24 August 2018 | (Family: none) | | | |
| CN | 103165882 | A | 19 June 2013 | (Family: none) | | | |
| JP | 2012-33481 | A | 16 February 2012 | US claims 1, 10-11 CN | 2012/0028118 102347473 | A1 A | |
| JP | 2022-528497 | A | 13 June 2022 | US claims 1, 8-9 WO EP CN KR CA | 2022/0158188 2020/208331 3953985 113692660 10-2021-0151811 3135333 | A1 A1 A1 A A A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009032678 A